# EUROPEAN PATENT SPECIFICATION

(11) **EP 0 613 025 B1**
(45) Date of publication and mention of the grant of the patent: **02.09.1998**
(21) Application number: 94301218.7
(22) Date of filing: 22.02.1994
(51) Int. Cl.: G01V 1/38

(54) **A device and method for positioning of towing systems for use in marine seismic surveys**
Gerät und Verfahren zum Positionieren von Schleppsystemen bei der meeresseismischen Vermessung
Dispositif et procédé de positionnement de systèmes remorqués pour l'utilisation lors de levés sysmiques marins

(30) Priority: 23.02.1993 NO 930641
(43) Date of publication of application: 31.08.1994
(73) Proprietor: GECO A.S., 4000 Stavanger (NO)
(72) Inventor: Elholm, Tor, N-1347 Hosle (NO)
(74) Representative: Robinson, John Stuart

(56) References cited:
- DE-A- 2 223 798
- US-A- 3 605 674
- US-A- 4 404 664

## Description

The present invention is concerned with seismic surveys. More specifically it concerns a device for, and a method of towing a seismic tow, consisting of a gun array and seismic streamers.

In marine seismic surveys, a ship is used which tows seismic sources and seismic streamers. The sources produce acoustic energy which is propagated in the geological formations below the seabed where the survey is undertaken. The sound pulse or shock wave generated by the sources is reflected as acoustic waves. The seismic streamer consists of hydrophones which detect the reflected acoustic waves, convert the signals to electrical pulses, and pass on this information to a data acquisition system on board the vessel. Further processing and analysis of the information give an indication of the structure in the geological formations in which the survey has been conducted.

A seismic source consists of a number of individual sound sources, e.g. airguns or waterguns. An arrangement of individual guns is usually called a gun array. Apart from the actual guns, a gun array also includes attachment devices, air hoses, electrical wires and sensors. A gun array measures 10-30 metres in length.

A seismic streamer, often called a hydrophone cable, consists mainly of hydrophones for the detection of acoustic waves, electronic modules, electrical wires and sensors apart from the actual framework. Seismic streamers are divided into sections approximately 100 metres in length, and have a total length of 2,000 - 6,000 metres.

A seismic tow or a seismic towing system consists of seismic streamers and seismic sources. A common feature of these units is that they can be positioned astern of and to the side of the ship's line of travel. In addition they are submerged in the water, the gun arrays at a depth of 5-15 metres below the surface and the streamers at a depth of 5-40 metres.

None of the above figures are absolute, and can, of course, vary outside those limits given here.

Seismic towing systems are becoming progressively more complex, i.e. they are composed of more sources and streamers. Increasing demands are also being made on the efficiency of a towing system. The efficiency can usually be measured on the basis of the extent of coverage obtained by a seismic tow. The coverage will be dependent on the width of the tow. One of the factors to which particular importance is attached is the positioning of the seismic tow. The quality of the collected data is dependent on how accurately the towing system has been positioned. In this context the term "positioned" refers to how each unit in the towing system, i.e. sources and streamers, is positioned in relation to the other units and the ship in the longitudinal and width directions.

One of the existing methods for positioning of seismic equipment which can be mentioned, is the use of otter-like devices with one or more foils. The otter is connected with a float on the surface, and by means of foils will guide a tow out to the side. There are several variations of the otter device. One known method is to have an individual foil or wing which can be mounted directly on to the streamer which is to be controlled. This type of otter device is also dependent on connection to a float on the surface.

Another method is to use surface vessels which are provided in such a manner that the vessel is towed at an angle, thus achieving a lateral force. Examples of this type of vessel which can be envisaged are vessels which are equipped with a tilted keel, or tilted foils, thus enabling the surface vessel to move out to the side.

The common feature of these methods and the equipment for obtaining a certain width for the towing system is that they all have a connection with the surface. This makes the vessels or floats particularly vulnerable to flotsam. In the event of a collision between a vessel or float and some flotsam, the towing system or parts of it will often be damaged. In a collision with flotsam, the vessel could change direction, so that large sections of the towing system may be damaged or moved out of position. The same thing may happen if it comes into contact with fishing tackle or other equipment which may be in the location of the tow.

US Patent Specification No. 3 605 674 describes an underwater cable controller comprising a body part carrying wings and rudders. Actuators are provided for controlling the rudders in accordance with signals received from a transducer located in the cable and/or the ship housing the cable. A plurality of such controllers are required to control a single cable. The body part of each controller consists of a closed housing which defines a generally central axial channel for mounting each controller at a desired position along the cable.

US Patent Specification No. 4 404 664 describes a similar device which is mounted to a cable in substantially the same way as that described above. However, the device includes position determining means within the body part itself. A similar controller is described in German Patent Specification No. 2 223 798.

A problem associated with all of the above described devices is that towing a number of such closed housings through the water can cause a great deal of drag. Severe drag also caused by surface vessels or floats, gives rise to two problems in particular; increased fuel expenses and increased difficulty in obtaining tow width. Waves will be generated which give rise to unwanted noise and vibrations for the towed equipment. In some cases there may also be problems with maintaining the equipment at a constant depth, especially when the survey is being conducted in heavy seas. It may also be a problem to keep the equipment on the correct course, with the equipment usually drifting in step with the waves.

It is obvious that the equipment is subject to a considerable degree of wear and tear and damage when it is exposed to those forces which are associated with a connection with the surface.

According to a first aspect of the present invention there is provided an apparatus for positioning seismic equipment as claimed in appended Claim 1.

According to a second aspect of the present invention there is provided a method of positioning seismic equipment as claimed in appended Claim 9.

According to a third aspect of the present invention there is provided an apparatus for positioning seismic equipment as claimed in appended Claim 10.

Preferred embodiments of the present invention are defined in the other appended claims.

It is thus possible to reduce the drag in a seismic tow. Furthermore the omission of a float or surface vessel and the perforated body which enables water to flow in and out of the device reduces the noise which results from the influence of surface and wave noise on the equipment and may reduce wear and tear and damage to the towing system.

It is further possible to increase the width or separation of the equipment which is being towed in order thereby to increase the efficiency of the survey. It is also possible to reduce the likelihood of damage to the equipment from objects floating in the water.

In one embodiment of the present invention, a device, generally called a positioning unit or a vessel, comprises a body part to which are attached at least two fairly large wings with a balance rudder or a large wing called a main wing. At the rear of the body part there is located a rudder or tail rudder. Both wings and rudder are adjustable and are thus equipped with control actuators. On the front part of the body there is provided a stabilizer rudder which can also be adjustable.

The interior of the positioning device may comprise, among other things, a power receiver part and battery. Furthermore, the instruments which may take the form of an inclinometer, a compass, pressure transmitters and pitot pressure transmitters are located in a watertight compartment in the body part. The compartment where batteries are located, is also watertight. Common components for the control actuators, in this case an hydraulic system, are located in a compartment in the body part. Additionally the body of the positioning unit may have one or more ballast tanks or buoyancy tanks with associated air supply system, together with a compressed air compartment.

The device may also be equipped with acoustic positioning equipment. This equipment consists of hydrophones and transducers which transmit and receive sound in such a manner that it is possible to calculate the distance between the units in the towing system.

Electrical cables are provided between the ship and the positioning unit. Communication to and from the vessel is conducted by transmitting electrical pulses, acoustic pulses or by another appropriate method for the transmission of information.

The device may have a control unit for the control of information and controlling the actuators.

Preferably at least one wing is provided with a buoyancy tank having an associated air supply system and valves.

The device is used to position a seismic tow consisting of sources and/or streamers. By having the positioning device located in the water astern of the ship and together with the streamers and sources which have to be towed, the device is able to position the gun array or cables. Control signals are transmitted to the device via a central source or a computer programme on board the ship, and information from the various instruments is transmitted from the positioning device to the ship. On the basis of given parameters concerning depth, pressure, speed, separation out to the side, etc., a computer programme is able to calculate which control signals should be transmitted to the device in order to guide it into the correct position. The calculation of the optimum position for the device may also be performed internally in the device. The position of the wings, tail rudder, stabilizer rudder and water level in the ballast tanks will ensure the correct adjustment of the positioning device at all times. The ballast tanks give the device a positive static buoyancy. This is essential in order to prevent the positioning device from sinking in the event of something unforseen happening such as the towing ship no longer moving forwards.

The present invention will further be described, by way of example, with reference to the accompanying drawings, in which:
Figure 1 shows a marine seismic survey system;
Figure 2a is a side view of a positioning device constituting an embodiment bf the present invention;
Figure 2b is a front view of the device shown in Figure 2a;
Figure 2c is a plan view of the device shown in Figure 2a;
Figure 3 is a sectional view of the device shown in Figures 2a-2c when viewed from above showing the internal arrangement thereof;
Figure 4 is a side view of the device, and particularly illustrates how the wings are arranged;
Figure 5 illustrates a tow of a streamer, where the tow is viewed from above;
Figure 6 illustrates a tow of a gun array or a streamer viewed from the side and positioned with a positioning device constituting an embodiment of the present invention; and
Figure 7 illustrates a tow viewed from above, the tow being positioned by a positioning device constituting an embodiment of the present invention.

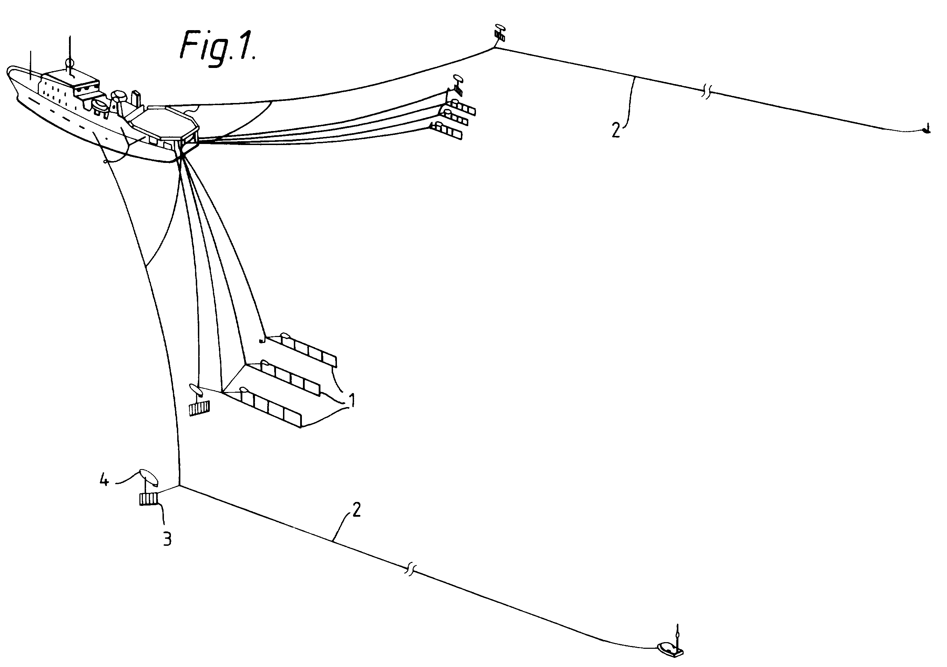

Fig. 1 illustrates a known arrangement of a marine seismic survey system. The drawing shows that in this case a ship is used which has a towing system or tow consisting of two streamers 2 and two sources 1, each consisting of three gun arrays. An otterboard 3 with several foils produces the lateral force, thus causing the equipment to be pulled out to the side of the ship's line of travel. Due to the weight of the towed equipment and the otterboard, a float 4 is provided which is placed on the sea surface and keeps the whole system at a specific depth below the surface of the sea.

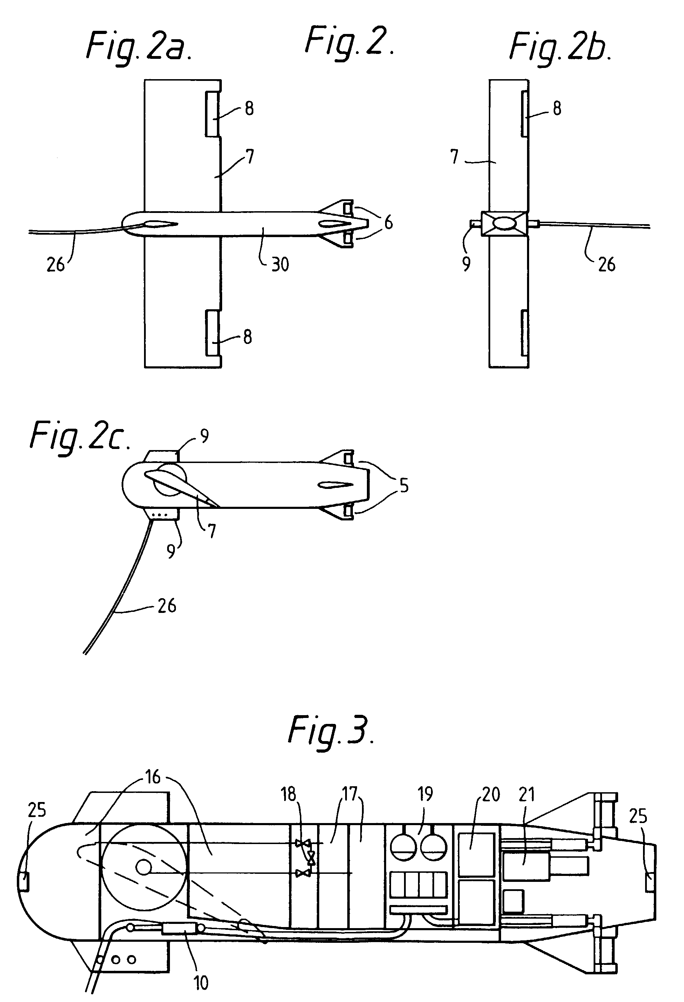

Fig. 2 illustrates a positioning device constituting an embodiment of the invention. Fig. 2a is a side view of the device. It comprises a body part 30, wings 7 with balance rudder 8 and tail rudder 6. Fig. 2b is a front view of the positioning device, in which stabilizer rudders 9 are provided. In fig. 2c the stabiliser rudders 9 are illustrated even more clearly. A view from above also provides a picture of two other tail rudders or fins 5. A cable 26 is the cable or connection, which the device has with the towed equipment and/or with the ship.

Fig. 3 shows an interior layout of the body 30 of the positioning device shown in Figure 2. The solution illustrated in the drawing is an example of how the body of the device is designed and arranged. The solution is not intended to be restricted to this form and layout, thus enabling devices with different solutions to fall within the scope of the invention.

In the device's forward and after ends there is provided acoustic positioning equipment 25. The positioning equipment comprises transducers and hydrophones, which transmit and receive sound. On this basis distances between the units in the towing equipment can be calculated. In addition to the positioning equipment, instruments are provided in a watertight compartment 19 for use in positioning the device. The instruments involved are an inclinometer, a compass, static pressure transmitters, pitot pressure transmitters and other pressure transmitters. In addition there are transmitters which can record angle deflection on wings and rudders. There is an hydraulic system which operates the position of the adjustable parts of the device. Common components for the hydraulic system such as pumps, oil, and control valves are located in a compartment 21. Actuators, such as pistons and cylinders 32 for the adjustment of the tail rudders 5 and 6 are also provided in compartment 21. A power supply is required for the electrical components and systems within the device. The power supply is partly transmitted from the towing cable directly to the electrical system, but batteries 20 are also provided in a watertight compartment 31. The batteries are located in the device as a reserve and supplementary power supply.

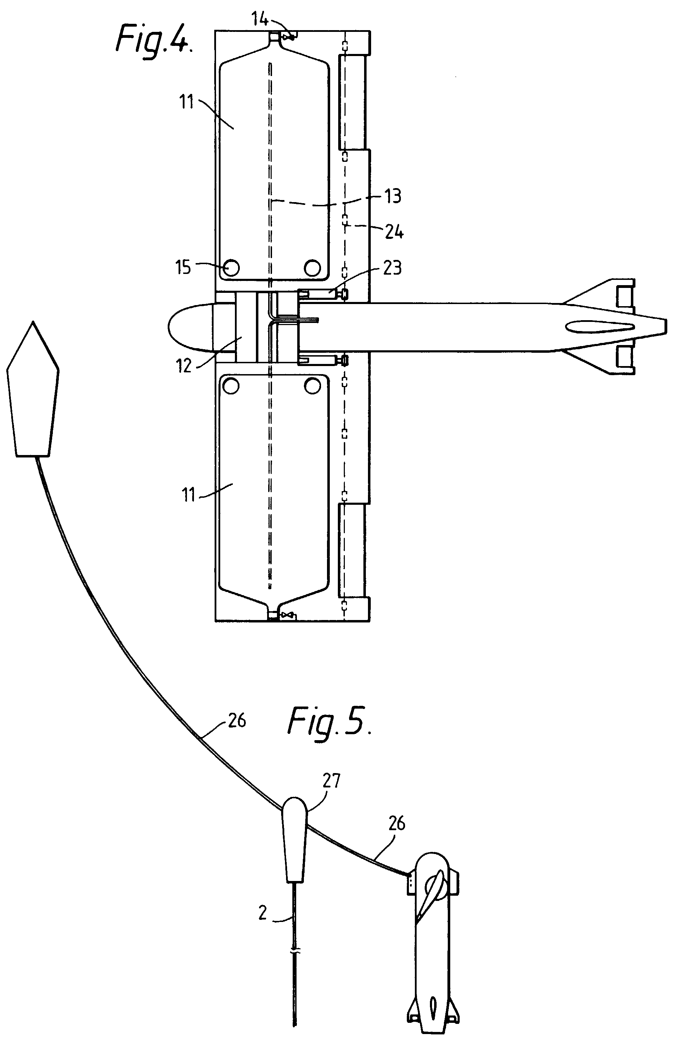

There are two sizeable ballast tanks or buoyancy tanks 16 in the device. These take in water when the device is placed in the water. However, if extra buoyancy is required, these tanks 16 can be filled with air. The air is transported from the compressed air reserve in a compartment 17 on board the device via air pipes to either the ballast tanks in the body part of the device or to the ballast or buoyancy tanks in the wings. A valve 18 is provided between the air supply to the wings and the air supply to the reserve tanks in the body part of the device. The wings are moved by two parallel piston and cylinder actuators 10. These are provided with the wing trunnion 12 illustrated in Fig. 4.

Fig. 4 also illustrates how each of the wings is provided with a buoyancy tank 11. An air pipe 13 is provided in order to supply air to the tanks, which are otherwise filled with water through open inlets 15. In order to be able to regulate the amount of air or water in the wing tanks, a valve 14 is located on the outside edge of the wings. The tip of the wing which has to regulate the buoyancy will always point upwards. The air, of course, will always be at the top of the tank. Thus no valve is required in order to close off the inflow of water. The water flows in and out of the holes 15, depending on how much air is blown into or released from the tank in the wing. The balance rudders 8 are regulated via piston and cylinder actuators 23. The actuators 23 are located inside the wings, closest to the body. A shaft 24 ensures that the force is transferred to the balance rudders.

The device is "open" to water, thus permitting the free flow of water in and out of the device, apart from the two watertight compartments which are designed for battery or power supply, and the compartment in which the instruments are located. Another advantage of having a through-flow of water in the device is that the device can be made relatively light, a feature which is advantageous when the device has to be deployed into the water and recovered on to the ship's deck, but partially fills with water so as to reduce its buoyancy when in the sea.

Hydraulic control is used for control of the movable wings and rudders of the device. An electrically operated pump generates oil pressure to operate the hydraulic actuators. A completely electrically operated control system can be used. The power supply is by means of electrical cables from the ship. This is already a tried and tested technique. Batteries are located in the device in order to cover an unexpected power requirement for a limited period. The batteries are charged from the power supply from the ship to the device.

Even though the device is steered mainly from the ship's central control system, the device itself is able to adjust its course by means of its own control loops, on the basis of information from angle indicators, pressure transmitters, speed transmitters, depth gauges, positioning instruments and other instruments installed in the device in order to provide as accurate positioning as possible.

The device may be directly mounted on gun arrays or streamers, or it may cooperate with a float which has slightly less buoyancy than the weight of that which is to be towed from the float. It will therefore be submerged in the water, but still take most of the weight from the towed equipment. An important purpose of this float is that it prevents vibrations and noise from the towing cables from propagating further to the streamers or gun arrays. The reason for this is that the submerged float will provide a change in impedance, thus causing the vibrations to be reflected instead of being passed on to the towed equipment.

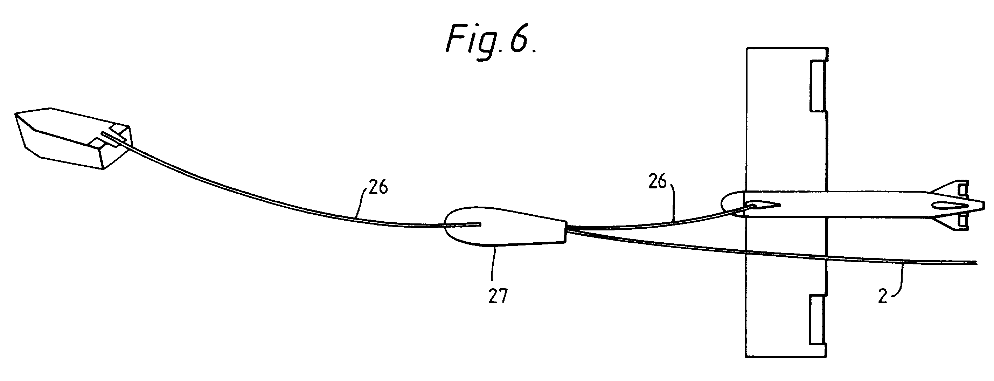

Figs. 5 and 6 illustrate a tow viewed from above in Fig. 5 and from the side in Fig. 6. The figures illustrate how one possible application of the positioning unit is envisaged. In this case a submerged float 27 is used as a junction for the towing cable to the ship, the towing cable to the actual hydrophone cable, and the towing point to the positioning device which pulls the whole system out to the side.

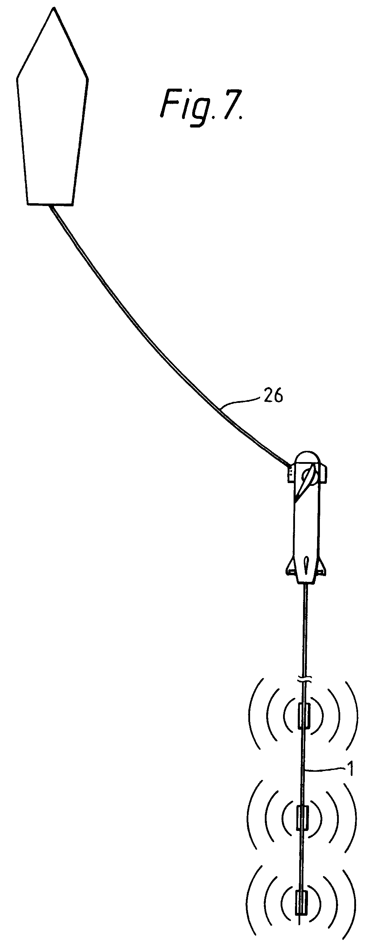

Figure 7 is an example of a tow viewed from above, where an underwater float is not used, but the positioning device is connected directly to the equipment which has to be towed and pulled out to the side.

## Claims

1. A device for positioning seismic equipment in a desired underwater position when towed by a survey vessel, the device comprising a body part (30) carrying at least one wing (7) and a plurality of control surfaces (5, 6, 8, 9), actuators (10, 23, 32) for controlling the positions of the at least one wing and the control surfaces so as to achieve said desired underwater position, control means for controlling the actuators, communication means for communication between the positioning device and the survey vessel, and an attachment device for a cable, characterised in that the body part (30) is perforated to enable water to flow in and out of the perforated regions of the body part (30), and in that the body part (30) has at least one watertight compartment (19) for housing position determining means for determining the position of the device.

2. A positioning device as claimed in Claim 1, characterised in that the attachment device is located in the vicinity of a region of attachment between the body part (30) and the at least one wing (7).

3. A positioning device as claimed in Claim 1 or 2, characterized in that the at least one wing defines a chamber (8) therein open to the flow of water in a part of the wing (7) adjacent the body part (30).

4. A positioning device as claimed in any one of the preceding claims characterized in that the at least one wing (7) is carried on a forward portion of the body part (30), and the control surfaces are carried at the front and/or at the rear of the device, at least one control surface being provided in the vertical plane and at least one control surface being provided in the horizontal plane.

5. A positioning device as claimed in any one of the preceding claims characterized by at least one buoyancy tank (16) with associated air supply system and valves, the air supply to the at least one buoyancy tank being provided by a compressed air tank in the device, and conveyed to the at least one buoyancy tank via a pipe system.

6. A device as claimed in any one of the preceding claims characterized in that the at least one wing has at least one balance rudder in the outer edge of the or each wing.

7. A device as claimed in Claim 3, characterized in that the chamber (8) is a buoyancy tank with a control valve located in the outer edge of the wing.

8. A device as claimed in any one of the preceding claims characterized in that the control means transmits and receives information between the vessel and the device.

9. A method for positioning of seismic equipment which is towed behind a vessel by means of a device as described in Claims 1 to 8, characterized in that the device is attached to the front part of the towing cable and positioned at a desired position on the basis of control signals calculated by the device itself or from a positioning programme on board the ship.

10. A device towed by a seismic vessel for positioning of seismic equipment which is towed by a seismic vessel, comprising:
a body part (30) equipped with wings (7) and rudders (5, 6, 8, 9),
a control body, preferably hydraulic or electrical, for the control of wings and rudders,
a control unit for processing of signals which preferably operate exclusively on the basis of information from the vessel, or from information from the ship,
instruments for use in the positioning of the device,
a communication system for communication between the vessel and the device and vice versa, preferably electrical, acoustic or optical,
an attachment device for one or more cables and floats, which are preferably provided at the front of the device, and preferably in the vicinity of the wing's attachment point to the device's body part, and
a power supply system; characterised in that the body part (30) is perforated to enable water to flow in and out of the perforated regions of the body part (30), and in that the body part (30) has at least one watertight compartment (19) for housing said instruments.

## Patentansprüche

1. Vorrichtung zum Positionieren einer seismischen Ausrüstung bei einer gewünschten Unterwasserposition, wenn die Ausrüstung von einem Vermessungsschiff geschleppt wird, aufweisend einen Rumpfteil (30), der mindestens einen Flügel (7) und eine Vielzahl von Steueroberflächen (5, 6, 8, 9) trägt, Aktuatoren (10, 23, 32), um die Positionen des mindestens einen Flügels und die Steueroberflächen so zu steuern, daß die gewünschte Unterwasserposition erreicht wird, Steuermittel, um die Aktuatoren zu steuern, Kommunikationsmittel für die Kommunikation zwischen der Positioniervorrichtung und dem Vermessungsschiff, und eine Befestigungsvorrichtung für ein Kabel, dadurch gekennzeichnet, daß der Rumpfteil (30) perforiert ist, damit Wasser in die perforierten Gebiete des Rumpfteils (30) hineinfließen und aus diesen Gebieten herausfließen kann, und daß der Rumpfteil (30) mindestens ein wasserdichtes Abteil (19) hat, um Mittel zum Bestimmen der Position der Vorrichtung unterzubringen.

2. Positioniervorrichtung gemäß Anspruch 1, dadurch gekennzeichnet, daß die Befestigungsvorrichtung in der Nähe eines Gebietes gelegen ist, in dem der Rumpfteil (30) an dem mindestens einen Flügel (7) befestigt ist.

3. Positioniervorrichtung gemäß Anspruch 1 oder 2, dadurch gekennzeichnet, daß der mindestens eine Flügel eine darin vorgesehene Kammer (8) definiert, die bei einem an den Rumpfteil (30) angrenzenden Teil des Flügels (7) für die Wasserströmung offen ist.

4. Positioniervorrichtung gemäß irgendeinem der vorhergehenden Ansprüche, dadurch gekennzeichnet, daß der mindestens eine Flügel (7) auf einem vorderen Bereich des Rumpfteils (30) getragen wird, und die Steueroberflächen an dem vorderen und/oder hinteren Ende der Vorrichtung getragen werden, wobei mindestens eine Steueroberfläche in der vertikalen Ebene vorgesehen ist, und mindestens eine Steueroberfläche in der horizontalen Ebene vorgesehen ist.

5. Positioniervorrichtung gemäß irgendeinem der vorhergehenden Ansprüche, gekennzeichnet durch mindestens einen Auftriebtank (16) mit Luftzuführungssystem und Ventilen, wobei die Luft für den mindestens einen Auftriebtank von einem in der Vorrichtung vorgesehenen Drucklufttank geliefert wird, und über ein Rahrsystem nach dem mindestens einen Auftriebtank befördert wird.

6. Vorrichtung gemäß irgendeinem der vorhergehenden Ansprüche, dadurch gekennzeichnet, daß der mindestens eine Flügel mindestens ein Balanceruder in dem äußeren Rand des oder jedes Flügels hat.

7. Vorrichtung gemäß Anspruch 3, dadurch gekennzeichnet, daß die Kammer (8) ein Auftriebtank mit einem in dem äußeren Rand des Flügels gelegenen Steuerventil ist.

8. Vorrichtung gemäß irgendeinem der vorhergehenden Ansprüche, dadurch gekennzeichnet, daß die Steuermittel der Vorrichtung Information nach dem Schiff senden und von dem Schiff empfangen.

9. Verfahren zum Positionieren einer seismischen Ausrüstung, die hinter einem Schiff geschleppt wird, mittels einer Vorrichtung, wie sie in den Ansprüchen 1 bis 8 beschrieben wurde, dadurch gekennzeichnet, daß die Vorrichtung an dem vorderen Teil des Schleppkabels befestigt ist, und auf der Basis von Steuersignalen, die von der Vorrichtung selbst oder mittels eines Positionierungsprogrammes an Bord des Schiffes berechnet werden, bei einer gewünschten Position positioniert wird.

10. Von einem seismischen Schiff geschleppte Vorrichtung zum Positionieren einer seismischen Ausrüstung, die von einem seismischen Schiff geschleppt wird, aufweisend:
einen Rumpfteil (30), der mit Flügeln (7) und Rudern (5, 6, 8, 9) ausgerüstet ist,
einen vorzugsweise hydraulischen oder elektrischen Steuerkörper zur Steuerung der Flügel und Ruder,
eine Steuereinheit zur Verarbeitung von Signalen, die vorzugsweise ausschließlich auf der Basis von Information von dem Schiff, oder aufgrund von Information von der Vorrichtung arbeitet,
Instrumente zur Verwendung beim Positionieren der Vorrichtung,
ein vorzugsweise elektrisches, akustisches oder optisches Kommunikationssystem für die Kommunikation von dem Schiff nach der Vorrichtung, und umgekehrt,
eine Befestigungsvorrichtung zum Befestigen von einem oder mehr Kabeln und Schwimmkörpern, die vorzugsweise an dem vorderen Ende der Vorrichtung, und vorzugsweise in der Nähe des Punktes, bei dem die Flügel an dem Rumpfteil der Vorrichtung befestigt sind, vorgesehen ist, und
ein Stromversorgungssystem;
dadurch gekennzeichnet, daß der Rumpfteil (30) perforiert ist, damit Wasser in die perforierten Gebiete des Rumpfteils (30) hineinfließen und aus diesen Gebieten herausfließen kann, und daß der Rumpfteil (30) mindestens ein wasserdichtes Abteil (19) hat, um die Instrumente unterzubringen.

## Revendications

1. Un dispositif de positionnement d'un équipement sismique, dans une position immergée souhaitée, lors du remorquage par un vaisseau de prospection, le dispositif comprenant un corps (30) portant au moins une aile (7) et des surfaces de gouvernes (5, 6, 8, 9), des actionneurs (10, 23, 32) destinés à commander les positions de la au moins une aile et les surfaces de gouverne de manière à obtenir ladite position souhaitée sous l'eau, les moyens de commande destinés à commander les actionneurs, des moyens de communication destinés à établir une communication entre le dispositif de positionnement et le vaisseau de prospection, et un dispositif de fixation destiné à un câble, caractérisé en ce que le corps (30) est perforé afin de permettre à l'eau de s'écouler vers l'intérieur et vers l'extérieur des zones perforées du corps (30), et en ce que le corps (30) a au moins un compartiment étanche à l'eau (19) destiné à recevoir des moyens de détermination de position conçus pour déterminer la position du dispositif.

2. Un dispositif de positionnement selon la revendication 1, caractérisé en ce que le dispositif de fixation est situé à proximité d'une zone de fixation entre le corps (30) et la au moins une aile (7).

3. Un dispositif de positionnement selon la revendication 1 ou 2, caractérisé en ce que la au moins une aile définit en son sein une chambre (8), ouverte à l'écoulement de l'eau, dans une partie de l'aile (7) qui est adjacente au corps (30).

4. Un dispositif de positionnement selon l'une quelconque des revendications précédentes, caractérisé en ce que la au moins une aile (7) est portée en une position avant du corps (30), et les surfaces de gouverne sont portées sur l'avant et/ou l'arrière du dispositif, au moins une surface de gouverne étant prévue dans le plan vertical et au moins une surface de gouverne étant prévue dans le plan horizontal.

5. Un dispositif de positionnement selon l'une quelconque des revendications précédentes, caractérisé par au moins un réservoir de flottaison (16) ayant un système et des soupapes d'alimentation en air associés, l'alimentation en air apportée au au moins un réservoir de flottaison étant assurée par un réservoir d'air comprimé prévu dans le dispositif, et transportée au au moins un réservoir de flottaison, via un système de tuyauterie.

6. Un dispositif selon l'une quelconque des revendications précédentes, caractérisé en ce que la au moins une aile a une gouverne d'équilibrage prévue dans le bord extérieur de l'aile ou de chaque aile.

7. Un dispositif selon la revendication 3, caractérisé en ce que la chambre (8) est un réservoir de flottaison doté d'une soupape de commande placée dans le bord extérieur de l'aile.

8. Un dispositif selon l'une quelconque des revendications précédentes, caractérisé en ce les moyens de commande transmettent et reçoivent une information entre le vaisseau et le dispositif.

9. Un procédé de positionnement d'un équipement sismique, remorqué derrière un vaisseau au moyen d'un dispositif tel que décrit aux revendications 1 à 8, caractérisé en ce que le dispositif est fixé à la partie avant du câble de remorquage et est positionné en une position souhaitée en se basant sur des signaux de commande issus d'un calcul par le dispositif lui-même ou par un programme de positionnement situé à bord du navire.

10. Un dispositif remorqué par un vaisseau sismique pour positionner un équipement sismique remorqué par un vaisseau sismique, comprenant :
un corps (30) équipé d'ailes (7) et de gouvernes (5, 6, 8, 9),
un corps de commande, de préférence hydraulique ou électrique, destiné à la commande des ailes et des gouvernes,
une unité de commande destinée à traiter des signaux qui de préférence agissent exclusivement sur la base d'une information issue du vaisseau, ou bien d'une information issue du navire,
des instruments destinés à être utilisés dans le positionnement du dispositif,
un système de communication destiné à établir une communication entre le vaisseau et le dispositif et vice versa, de préférence de façon électrique, acoustique ou optique,
un dispositif de fixation destiné à un ou plusieurs câbles et flotteurs, prévu de préférence à l'avant du dispositif, et de préférence à proximité du point de fixation de l'aile sur le corps du dispositif, et
un système d'alimentation en puissance, caractérisé en ce que le corps (30) est perforé afin de permettre à l'eau de s'écouler pour pénétrer et sortir des zones perforées du corps (30), et en ce que le corps (30) a au moins un compartiment étanche à l'eau (19) destiné à recevoir lesdits instruments.
